# EUROPÄISCHE PATENTANMELDUNG

(11) **EP 1 882 414 A1**
(43) Veröffentlichungstag der Anmeldung: **30.01.2008**
(21) Anmeldenummer: 06015855.7
(22) Anmeldetag: 29.07.2006
(51) Int. Cl.: A01N 25/14

(54) **Schmelzgranulate**

(71) Anmelder: Bayer CropScience AG, 40789 Monheim (DE)
(72) Erfinder: Frisch, Gerhard, D-61273 Wehrheim (DE); Baumgärtner, Joachim, D-65931 Frankfurt am Main (DE); Ebersold, Ulrike, D-65795 Hattersheim (DE); Buckpesch, Ute, D-65719 Hofheim (DE)

(57) **Zusammenfassung**

Ein Schmelzgranulat, enthaltend
a) einen oder mehrere Wirkstoffe;
b) ein oder mehrere Tenside;
c) ein oder mehrere Bindemittel aus der Gruppe der Saccharide und Polyethylenglykole mit einem Molekulargewicht von mindestens 15000;
d) einen oder mehrere Träger und
e) gegebenenfalls weitere Hilfs- und Zusatzstoffe,

eignet sich insbesondere im Pflanzenschutz zur Bekämpfung von Schadorganismen.

## Beschreibung

Die Erfindung betrifft das Gebiet der Wirkstoffgranulate, insbesondere Schmelzgranulate agrochemischer Wirkstoffe und ein Verfahren zu deren Herstellung.

Bekannt sind dem Fachmann Wirkstoffgranulate, wie Absorbergranulate verschiedener Art, z.B. Extrudergranulate, Sprühgranulate, Wirbelschichtgranulate oder Tellergranulate (siehe z.B. Winnacker-Küchler, "Chemische Technologie", Band 7, C.Hanser-Verlag, München, 4. Auflage 1986). Auch bestimmte Arten von Schmelzgranulaten sind bereits beschrieben worden, z.B. in ASTM Spec Tech Publ (1999) STP 1373, S. 43-45, US 2,799,241 und WO 95/09044. Hier werden Wirkstoffe und Hilfsmittel in eine rotierende Kammer gegeben und per Mikrowelle (915 MHz) aufgeheizt. Dabei werden EO-PO-Blockcopolymere, wie Pluronic^{®} F 108, Wachse, wie Carbowachs 8000, Hoechst Wachs KST, Wax S, Paraffinwachse, Carnauba Wachse, oxidierte Polyethylenwachse (Epolene E-10 Wax, Eastman Kodak), ethoxylierte Alkohole und Nonylphenol als schmelzende Komponente und Bindemittel verwendet.

Obwohl mit solchen Schmelzgranulaten bereits gute Ergebnisse erzielt wurden, besteht noch ein breiter Raum für Verbesserungen, beispielsweise was die Dispergierungsgeschwindigkeit solcher Formulierungen angeht.

Aufgabe der Erfindung ist es, ein zumindest in Teilbereichen verbessertes Wirkstoffgranulat zur Verfügung zu stellen.

Diese Aufgabe wird gelöst durch Schmelzgranulate mit bestimmten Bindemitteln.

Gegenstand der Erfindung ist somit ein Schmelzgranulat, enthaltend
a) einen oder mehrere Wirkstoffe;
b) ein oder mehrere Tenside;
c) ein oder mehrere Bindemittel aus der Gruppe der Saccharide und Polyethylenglykole mit einem Molekulargewicht von mindestens 15000;
d) einen oder mehrere Träger und
e) gegebenenfalls weitere Hilfs- und Zusatzstoffe.

In den erfindungsgemäßen Schmelzgranulaten enthaltene Wirkstoffe a) können z.B. Farbstoffe, agrochemische Wirkstoffe, Kleber, Sprengstoffe, pharmazeutische oder veterinärmedizinische Wirkstoffe, Reiniger, Duftstoffe oder Proteine sein, bevorzugt sind agrochemische Wirkstoffe.

Als agrochemische Wirkstoffe a) kommen z.B. Herbizide, Insektizide, Fungizide, Safener und Wachstumsregulatoren in Betracht. Bevorzugt sind Herbizide, z.B. blattaktive Herbizide wie ALS-Inhibitoren (z.B. Sulfonamide wie Flucarbazone, Propoxycarbazone oder Amicarbazone oder Sulfonylharnstoffe wie Mesosulfuron, lodosulfuron, Amidosulfuron, Foramsulfuron), Diflufenican, Bromoxynilhaltige oder loxynilhaltige Produkte, Herbizide aus der Klasse der Aryloxy-Phenoxypropionate wie Fenoxaprop-p-ethyl, Zuckerrübenherbizide wie Desmedipham, Phenmedipham, Ethofumesate oder Metamitron, oder auch Wirkstoffe aus der Klasse der HPPD-Inhibitoren (z.B. Isoxaflutole, Sulcotrione, Mesotrione).

Unter den in den erfindungsgemäßen Wirkstoff-Formulierungen als Komponente a) enthaltenen Wirkstoffen sind im Sinne der vorliegenden Erfindung neben den neutralen Verbindungen stets auch deren Salze mit anorganischen und/oder organischen Gegenionen zu verstehen. So können beispielsweise Sulfonylharnstoffe z.B. Salze bilden, bei denen der Wasserstoff der -SO₂-NH-Gruppe durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCl, HBr, H₂SO₄ oder HNO₃.

### Beispiele für einzelne Wirkstoffe sind:

### Herbizide

Beispiele für Herbizide sind z.B. ALS-Inhibitoren (Acetolactat-Synthetase-Inhibitoren) oder Herbizide aus der Gruppe der Carbamate, Thiocarbamate, Halogenacetanilide, substituierte Phenoxy-, Naphthoxy- und Phenoxyphenoxycarbonsäure-Derivate sowie Heteroaryloxy-phenoxyalkancarbonsäure-Derivate, wie Chinolyloxy-, Chinoxalyl-oxy-, Pyridyloxy-, Benzoxazolyloxy- und Benzthiazolyloxyphenoxyalkancarbonsäureester, Cyclo-hexandionabkömmlinge, Imidazolinone, Phosphor-haltige Herbizide, z.B. vom Glufosinate-Typ oder vom Glyphosate-Typ, Pyrimidinyloxy-pyridincarbonsäure-Derivate, Pyrimidyloxy-benzoesäure-Derivate, Triazolopyrimidin-sulfonamid-Derivate sowie S-(N-Aryl-N-alkylcarbamoylmethyl)-dithiophosphorsäureester.
A) Bevorzugte ALS-Inhibitoren entstammen aus der Reihe der Sulfonylharnstoffe und/oder ihrer Salze, z.B. Pyrimidin- oder Triazinylaminocarbonyl-[benzol-, pyridin-, pyrazol-, thiophen- und (alkylsulfonyl)-alkylamino-]-sulfamide. Solche geeigneten Sulfonylharnstoffe sind beispielsweise
A1) Phenyl- und Benzylsulfonylharnstoffe und verwandte Verbindungen, z.B.
   1-(2-Chlorphenylsulfonyl)-3-(4-methoxy-6-methyl-1,3,5-triazin-2-yl)-harnstoff (Chlorsulfuron),
   1-(2-Ethoxycarbonylphenylsulfonyl)-3-(4-chlor-6-methoxypyrimidin-2-yl)-harnstoff (Chlorimuron-ethyl),
   1-(2-Methoxyphenylsulfonyl)-3-(4-methoxy-6-methyl-1,3,5-triazin-2-yl)-harnstoff (Metsulfuron-methyl),
   1-(2-Chlorethoxyphenylsulfonyl)-3-(4-methoxy-6-methyl-1,3,5-triazin-2-yl)-harnstoff (Triasulfuron),
   1-(2-Methoxycarbonylphenylsulfonyl)-3-(4,6-dimethylpyrimidin-2-yl)-harnstoff (Sulfumeturon-methyl),
   1-(2-Methoxycarbonylphenylsulfonyl)-3-(4-methoxy-6-methyl-1,3,5-triazin-2-yl)-3-methylharnstoff (Tribenuron-methyl),
   1-(2-Methoxycarbonylbenzylsulfonyl)-3-(4,6-dimethoxypyrimidin-2-yl)-harnstoff (Bensulfuron-methyl),
   1-(2-Methoxycarbonylphenylsulfonyl)-3-(4,6-bis-(difluormethoxy)pyrimidin-2-yl)-harnstoff, (Primisulfuron-methyl),
   3-(4-Ethyl-6-methoxy-1,3,5-triazin-2-yl)-1-(2,3-dihydro-1,1-dioxo-2-methylbenzo-[b]thiophen-7-sulfonyl)-harnstoff (EP-A 0 079 683),
   3-(4-Ethoxy-6-ethyl-1,3,5-triazin-2-yl)-1-(2,3-dihydro-1,1 -dioxo-2-methylbenzo[b]-thiophen-7-sulfonyl)harnstoff (EP-A 0 079 683),
   3-(4-Methoxy-6-methyl-1,3,5-triazin-2-yl)-1-(2-methoxycarbonyl-5-jod-phenylsulfonyl)-harnstoff (lodosulfuron-methyl und dessen Natriumsalz, WO 92/13845), DPX-66037, Triflusulfuron-methyl (s. Brighton Crop Prot. Conf. - Weeds - 1995, S. 853),
   CGA-277476, (s. Brighton Crop Prot. Conf. - Weeds - 1995, S. 79), Methyl-2-[3-(4,6-dimethoxypyrimidin-2-yl)ureidosulfonyl]-4-methansulfon-amido-methyl-benzoat (Mesosulfuron-methyl, WO 95/10507),
   N,N-Dimethyl-2-[3-(4,6-dimethoxypyrimidin-2-yl)ureidosulfonyl]-4-formylaminobenzamid (Foramsulfuron, WO 95/01344);
A2) Thienylsulfonylharnstoffe, z.B.
   1-(2-Methoxycarbonylthiophen-3-yl)-3-(4-methoxy-6-methyl-1,3,5-triazin-2-yl)harnstoff (Thifensulfuron-methyl);
A3) Pyrazolylsulfonylharnstoffe, z.B.
   1-(4-Ethoxycarbonyl-1-methylpyrazol-5-yl-sulfonyl)-3-(4,6-dimethoxypyrimidin-2-yl)harnstoff (Pyrazosulfuron-methyl);
   Methyl-3-chlor-5-(4,6-dimethoxypyrimidin-2-ylcarbamoylsulfamoyl)-1-methyl-pyrazol-4-carboxylat (EP-A 0 282 613);
   5-(4,6-Dimethylpyrimid in-2-yl-carbamoylsulfamoyl)-1-(2-pyridyl)-pyrazol-4-carbonsäuremethylester (NC-330, s. Brighton Crop Prot. Conference'Weeds' 1991, Vol. 1, S. 45 ff.),
   DPX-A8947, Azimsulfuron, (s. Brighton Crop Prot. Conf. 'Weeds' 1995, S. 65);
A4) Sulfondiamid-Derivate, z.B.
   3-(4,6-Dimethoxypyrimidin-2-yl)-1-(N-methyl-N-methylsulfonylaminosulfonyl)-harnstoff (Amidosulfuron) und dessen Strukturanaloge (EP-A 0 131 258 und Z. Pfl. Krankh. Pfl. Schutz, Sonderheft XII, 489-497 (1990));
A5) Pyridylsulfonylharnstoffe, z.B.
   1-(3-N,N-Dimethylaminocarbonylpyridin-2-ylsulfonyl)-3-(4,6-dimethoxypyrimidin-2-yl)-harnstoff (Nicosulfuron),
   1-(3-Ethylsulfonylpyridin-2-ylsulfonyl)-3-(-(4,6-dimethoxypyrimidin-2-yl)-harnstoff (Rimsulfuron),
   2-[3-(4,6-Dimethoxypyrimidin-2-yl)-ureidosulfonyl]-6-trifluormethyl-3-pyridin-carbonsäuremethylester, Natriumsalz (DPX-KE 459, Flupyrsulfuron, s. Brighton Crop Prot. Conf. Weeds, 1995, S. 49),
   Pyridylsulfonylharnstoffe, wie sie z.B. in DE-A 40 00 503 und DE-A 40 30 577 beschrieben sind, vorzugsweise solche der Formel 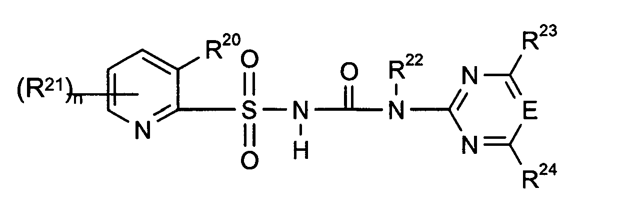 worin
   E CH oder N, vorzugsweise CH,
   R²⁰ Iod oder NR²⁵R²⁶,
   R²¹ Wasserstoff, Halogen, Cyano, (C₁-C₃)-Alkyl, (C₁-C₃)-Alkoxy, (C₁-C₃)-Halogenalkyl, (C₁-C₃)-Halogenalkoxy, (C₁-C₃)-Alkylthio, (C₁-C₃)-Alkoxy-(C₁-C₃)-alkyl, (C₁-C₃)-Alkoxy-carbonyl, Mono- oder Di-((C₁-C₃)-alkyl)-amino, (C₁-C₃)-Alkylsulfinyl oder -sulfonyl, SO₂-NR^{x}R^{y} oder CO-NR^{x}R^{y}, insbesondere Wasserstoff,
   R^{x}, R^{y} unabhängig voneinander Wasserstoff, (C₁-C₃)-Alkyl, (C₁-C₃)-Alkenyl, (C₁-C₃)-Alkinyl oder zusammen -(CH₂)₄-, -(CH₂)₅- oder -(CH₂)₂-O-(CH₂)₂-,
   n 0,1,2 oder 3, vorzugsweise 0 oder 1 ist,
   _{R}²² Wasserstoff oder CH₃,
   R²³ Halogen, (C₁-C₂)-Alkyl, (C₁-C₂)-Alkoxy, (C₁-C₂)-Halogenalkyl, insbesondere CF₃, (C₁-C₂)-Halogenalkoxy, vorzugsweise OCHF₂ oder OCH₂CF₃,
   R²⁴ (C₁-C₂)-Alkyl, (C₁-C₂)-Halogenalkoxy, vorzugsweise OCHF₂, oder (C₁-C₂)-Alkoxy,
   R²⁵ (C₁-C₄)-Alkyl,
   R²⁶ (C₁-C₄)-Alkylsulfonyl oder
   R²⁵ und R²⁶ gemeinsam eine Kette der Formel -(CH₂)₃SO₂- oder -(CH₂)₄SO₂-bedeuten, z.B. 3-(4,6-Dimethoxypyrimiden-2-yl)-1-(3-N-methylsulfonyl-N-methylaminopyridin-2-yl)-sulfonylharnstoff, oder deren Salze;
A6) Alkoxyphenoxysulfonylharnstoffe, wie sie z.B. in EP-A 0 342 569 beschrieben sind, vorzugsweise solche der Formel 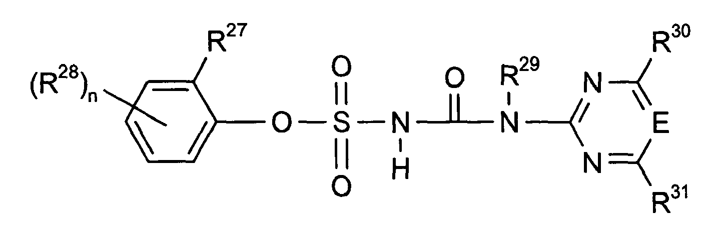 worin
   E CH oder N, vorzugsweise CH,
   R²⁷ Ethoxy, Propoxy oder Isopropoxy,
   R²⁸ Halogen, N0₂, CF₃, CN, (C₁-C₄)-Alkyl, (C₁-C₄)-Alkoxy, (C₁-C₄)-Alkylthio oder (C₁-C₃)-Alkoxy-carbonyl, vorzugsweise in 6-Position am Phenylring,
   n 0, 1, 2 oder 3, vorzugsweise 0 oder 1,
   R²⁹ Wasserstoff, (C₁-C₄)-Alkyl oder (C₃-C₄)-Alkenyl,
   R³⁰, R³¹ unabhängig voneinander Halogen, (C₁-C₂)-Alkyl, (C₁-C₂)-Alkoxy, (C₁-C₂)-Halogenalkyl, (C₁-C₂)-Halogenalkoxy oder (C₁-C₂)-Alkoxy-(C₁-C₂)-alkyl, vorzugsweise OCH₃ oder CH₃, bedeuten, z.B. 3-(4,6-Dimethoxypyrimidin-2-yl)-1-(2-ethoxyphenoxy)-sulfonylharnstoff, oder deren Salze;
A7) Imidazolylsulfonylharnstoffe, z.B.
   MON 37500, Sulfosulfuron (s. Brighton Crop Prot. Conf. 'Weeds', 1995, S: 57), und andere verwandte Sulfonylharnstoff-Derivate und Mischungen daraus;
   Typische Vertreter dieser Wirkstoffe sind unter anderem die nachfolgend aufgeführten Verbindungen: Amidosulfuron, Azimsulfuron, Bensulfuron-Methyl, Chlorimuron-Ethyl, Chlorsulfuron, Cinosulfuron, Cyclosulfamuron, Ethametsulfuron-Methyl, Ethoxysulfuron, Flazasulfuron, Flupyrsulfuron-Methyl-Natrium, Halosulfuron-Methyl, Imazosulfuron, Metsulfuron-Methyl, Nicosulfuron, Oxasulfuron, Primisulfuron-Methyl, Prosulfuron, Pyrazosulfuron-Ethyl, Rimsulfuron, Sulfometuron-Methyl, Sulfosulfuron, Thifensulfuron-Methyl, Triasulfuron, Tribenuron-Methyl, Triflusulfuron-Methyl, lodosulfuron-Methyl und dessen Natriumsalz (WO 92/13845), Mesosulfuron-Methyl und dessen Natriumsalz (Agrow Nr. 347, 3. März 2000, Seite 22 (PJB Publications Ltd. 2000)) und Foramsulfuron und dessen Natriumsalz (Agrow Nr. 338, 15. Oktober 1999, Seite 26 (PJB Publications Ltd. 2000)).
B) Herbizide vom Typ der Phenoxyphenoxy- und Heteroaryloxyphenoxycarbonsäure-Derivate, wie
B1) Phenoxyphenoxy- und Benzyloxyphenoxy-carbonsäure-Derivate, z.B. 2-(4-(2,4-Dichlorphenoxy)-phenoxy)-propionsäuremethylester (Diclofop-methyl),
   2-(4-(4-Brom-2-chlorphenoxy)-phenoxy)-propionsäuremethylester (DE-A 26 01 548),
   2-(4-(4-Brom-2-fluorphenoxy)-phenoxy)-propionsäuremethylester (US-A 4,808,750),
   2-(4-(2-Chlor-4-trifluormethylphenoxy)-phenoxy)-propionsäuremethylester (DE-A 24 33 067),
   2-(4-(2-Fluor-4-trifluormethylphenoxy)-phenoxy)-propionsäuremethylester (US-A 4,808,750),
   2-(4-(2,4-Dichlorbenzyl)-phenoxy)-propionsäuremethylester (DE-A 24 17 487),
   4-(4-(4-Trifluormethylphenoxy)-phenoxy)-pent-2-en-säureethylester,
   2-(4-(4-Trifluormethylphenoxy)-phenoxy)-propionsäuremethylester (DE-A 24 33 067);
B2) "Einkernige" Heteroaryloxyphenoxy-alkancarbonsäure-Derivate, z.B.
   2-(4-(3,5-Dichlorpyridyl-2-oxy)-phenoxy)-propionsäureethylester (EP-A 0 002 925),
   2-(4-(3,5-Dichlorpyridyl-2-oxy)-phenoxy)-propionsäurepropargylester (EP-A 0 003 114),
   2-(4-(3-Chlor-5-trifluormethyl-2-pyridyloxy)-phenoxy)-propionsäuremethylester (EP-A 0 003 890),
   2-(4-(3-Chlor-5-trifluormethyl-2-pyridyloxy)-phenoxy)-propionsäureethylester (EP-A 0 003 890),
   2-(4-(5-Chlor-3-fluor-2-pyridyloxy)-phenoxy)-propionsäurepropargylester (EP-A 0 191 736),
   2-(4-(5-Trifluormethyl-2-pyridyloxy)-phenoxy)-propionsäurebutylester (Fluazifop-butyl);
B3) "Zweikernige" Heteroaryloxyphenoxy-alkancarbonsäure-Derivate, z.B. 2-(4-(6-Chlor-2-chinoxalyloxy)-phenoxy)-propionsäuremethylester und -ethylester (Quizalofopmethyl und Quizalofopethyl),
   2-(4-(6-Fluor-2-chinoxalyloxy)-phenoxy)-propionsäuremethylester (s. J. Pest. Sci. Vol. 10, 61 (1985)),
   2-(4-(6-Chlor-2-chinoxalyloxy)-phenoxy)-propionsäure-2-isopropylidenaminooxyethylester (Propaquizafop),
   2-(4-(6-Chlorbenzoxazol-2-yl-oxy)-phenoxy)-propionsäureethylester (Fenoxapropethyl), dessen D(+) Isomer (Fenoxaprop-P-ethyl) und 2-(4-(6-Chlorbenzthiazol-2-yloxy)-phenoxy)-propionsäureethylester (DE-A 26 40 730),
   2-(4-(6-Chlorchinoxalyloxy)-phenoxy)-propionsäure-tetrahydro-2-furylmethylester (EP-A 0 323 727);
C) Chloracetanilide, z.B.
   N-Methoxymethyl-2,6-diethyl-chloracetanilid (Alachlor),
   N-(3-Methoxyprop-2-yl)-2-methyl-6-ethyl-chloracetanilid (Metolachlor),
   N-(3-Methyl-1,2,4-oxadiazol-5-yl-methyl)-chloressigsäure-2,6-dimethylanilid,
   N-(2,6-Dimethylphenyl)-N-(1-pyrazolylmethyl)-chloressigsäureamid (Metazachlor);
D) Thiocarbamate, z.B.
   S-Ethyl-N,N-dipropylthiocarbamat (EPTC),
   S-Ethyl-N,N-diisobutylthiocarbamat (Butylate);
E) Cyclohexandionoxime, z.B.
   3-(1-Allyloxyiminobutyl)-4-hydroxy-6,6-dimethyl-2-oxocyclohex-3-encarbonsäuremethylester, (Alloxydim),
   2-(1-Ethoxyiminobutyl)-5-(2-ethylthiopropyl)-3-hydroxy-cyclohex-2-en-1-on (Sethoxydim),
   2-(1-Ethoxyiminobutyl)-5-(2-phenylthiopropyl)-3-hydroxy-cyclohex-2-en-1-on (Cloproxydim),
   2-(1-(3-Chlorallyloxy)-iminobutyl)-5-(2-ethylthiopropyl)-3-hydroxy-cyclohex-2-en-1-on,
   2-(1-(3-Chlorallyloxy)-iminopropyl)-5-(2-ethylthiopropyl)-3-hydroxy-cyclohex-2-en-1-on (Clethodim),
   2-(1-Ethoxyiminobutyl)-3-hydroxy-5-(thian-3-yl)-cyclohex-2-en-on (Cycloxydim),
   2-(1-Ethoxyiminopropyl)-5-(2,4,6-trimethylphenyl)-3-hydroxy-cyclohex-2-en-1-on (Tralkoxydim);
F) Imidazolinone, z.B.
   2-(4-Isopropyl-4-methyl-5-oxo-2-imidazolin-2-yl)-5-methylbenzoesäure-methylester und 2-(4-Isopropyl-4-methyl-5-oxo-2-imidazolin-2-yl)-4-methylbenzoesäure (Imazamethabenz),
   5-Ethyl-2-(4-isopropyl-4-methyl-5-oxo-2-imidazolin-2-yl)-pyridin-3-carbonsäure (Imazethapyr),
   2-(4-Isopropyl-4-methyl-5-oxo-2-imidazolin-2-yl)-chinolin-3-carbonsäure (Imazaquin), 2-(4-Isopropyl-4-methyl-5-oxo-2-imidazolin-2-yl)-pyridin-3-carbonsäure (Imazapyr),
   5-Methyl-2-(4-isopropyl-4-methyl-5-oxo-2-imidazolin-2-yl)-pyridin-3-carbonsäure (Imazethamethapyr);
G) Triazolopyrimidinsulfonamid-Derivate, z.B.
   N-(2,6-Difluorphenyl)-7-methyl-1,2,4-triazolo[1,5-c]pyrimidin-2-sulfonamid (Flumetsulam),
   N-(2,6-Dichlor-3-methylphenyl)-5,7-dimethoxy-1,2,4-triazolo[1,5-c]pyrimidin-2-sulfonamid,
   N-(2,6-Difluorphenyl)-7-fluor-5-methoxy-1,2,4-triazolo[1,5-c]-pyrimidin-2-sulfonamid,
   N-(2,6-Dichlor-3-methylphenyl)-7-chlor-5-methoxy-1,2,4-triazolo[1,5-c]-pyrimidin-2-sulfonamid,
   N-(2-Chlor-6-methoxycarbonyl)-5,7-dimethyl-1,2,4-triazolo[1,5-c]-pyrimidin-2-sulfonamid (EP-A 0 343 752, US-A 4,988,812);
H) Benzoylcyclohexandione, z.B.
   2-(2-Chlor-4-methylsulfonylbenzoyl)-cyclohexan-1,3-dion (SC-0051, EP-A 0 137 963), 2-(2-Nitrobenzoyl)-4,4-dimethyl-cyclohexan-1,3-dion (EP-A 0 274 634),
   2-(2-Nitro-3-methylsulfonylbenzoyl)-4,4-dimethylcyclohexan-1,3-dion (WO 91/13548);
I) Pyrimidinyloxy-pyridincarbonsäure- bzw. Pyrimidinyloxybenzoesäure-Derivate, z.B.
   3-(4,6-Dimethoxypyrimidin-2-yl)-oxy-pyridin-2-carbonsäurebenzylester (EP-A 0 249 707),
   3-(4,6-Dimethoxypyrimidin-2-yl)-oxy-pyridin-2-carbonsäuremethylester (EP-A 0 249 707),
   2,6-Bis[(4,6-dimethoxypyrimidin-2-yl)-oxy]-benzoesäure (EP-A 0 321 846),
   2,6-Bis[(4,6-dimethoxypyrimidin-2-yl)-oxy]-benzoesäure-1-(ethoxycarbonyl-oxyethyl)-ester (EP-A 0 472 113);
J) S-(N-Aryl-N-alkyl-carbamoylmethyl)-dithiophosphonsäureester, wie S-[N-(4-Chlorphenyl)-N-isopropyl-carbamoylmethyl]-O,O-dimethyl-dithiophosphat (Anilophos).
K) Alkylazine, z.B. wie beschrieben in WO-A 97/08156, WO-A-97/31904, DE-A-19826670, WO-A-98/15536, WO-A-98/15537, WO-A-98/15538, WO-A-98/15539 sowie auch DE-A-19828519, WO-A-98/34925, WO-A-98/42684, WO-A-99/18100, WO-A-99/19309, WO-A-99/37627 und WO-A-99/65882, vorzugsweise solche der Formel (K) 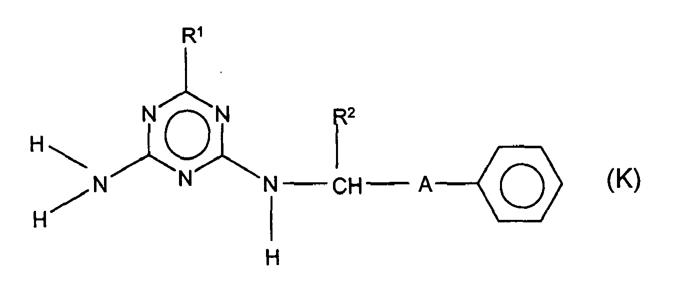 worin
   R¹ (C₁-C₄)-Alkyl oder (C₁-C₄)-Haloalkyl;
   R² (C₁-C₄)-Alkyl, (C₃-C₆)-Cycloalkyl oder (C₃-C₆)-Cycloalkyl-(C₁-C₄)-Alkyl und
   A -CH₂-, -CH₂-CH₂-, -CH₂-CH₂-CH₂-, -O-, -CH₂₋CH₂-O-, -CH₂-CH₂-CH₂-O-bedeuten, besonders bevorzugt solche der Formel K1-K7 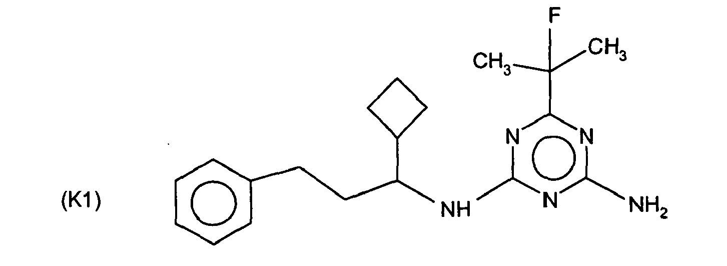 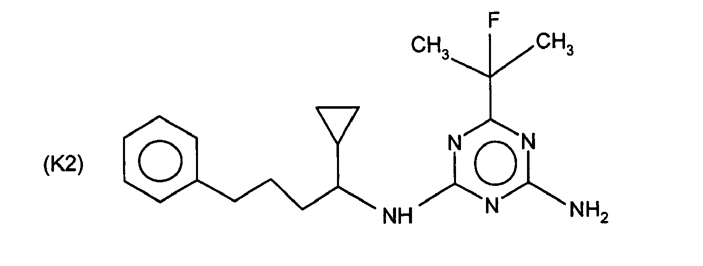 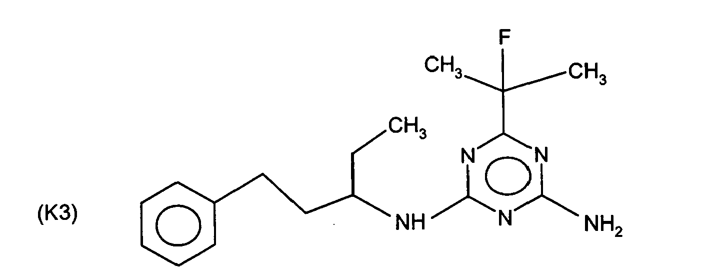 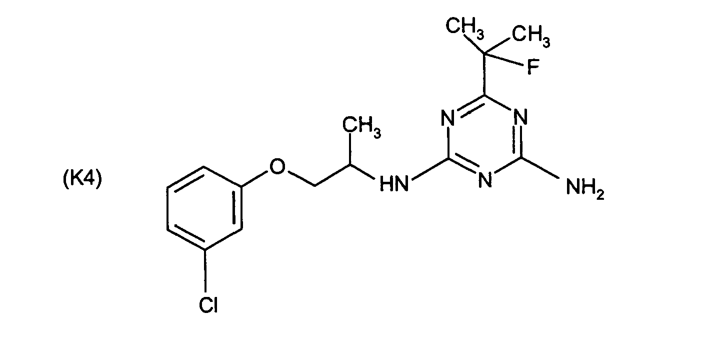 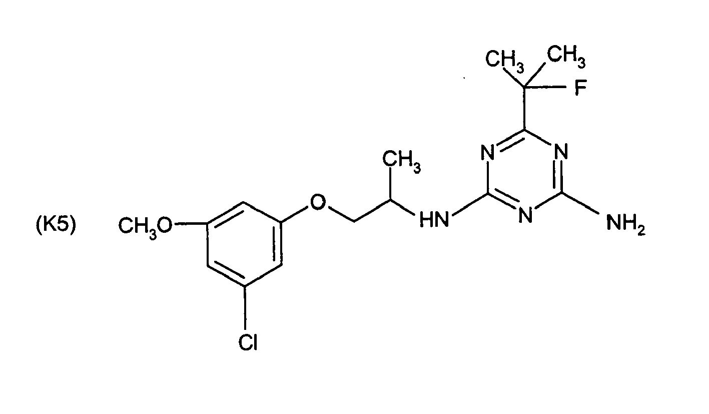 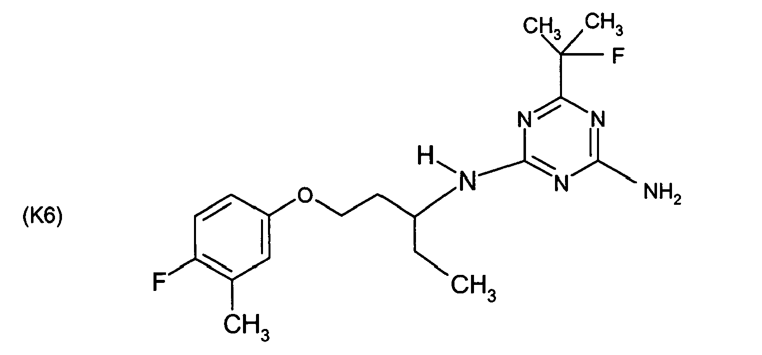 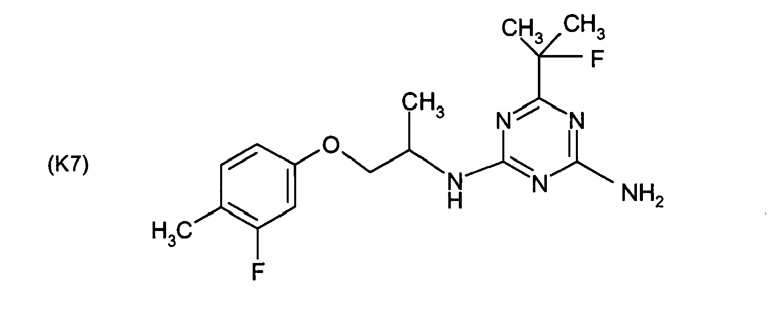
L) phosphorhaltige Herbizide, z.B. eine oder mehrere Verbindungen der Formel (IV) oder deren Derivate wie Salze, 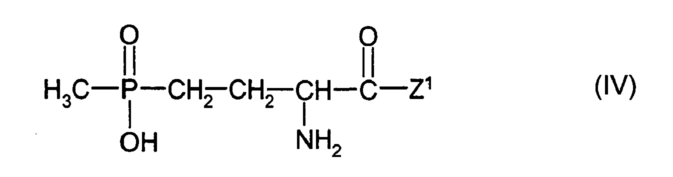 worin
   Z¹ einen Rest der Formel -OM, -NHCH(CH₃)CONHCH(CH₃)CO₂M oder -NHCH(CH₃)CONHCH[CH₂CH(CH₃)₂]CO₂M und
   M = H oder ein Salz bildendes Kation bedeuten,
   und/oder eine oder mehrere Verbindungen der Formel (V) oder deren Derivate wie Salze, 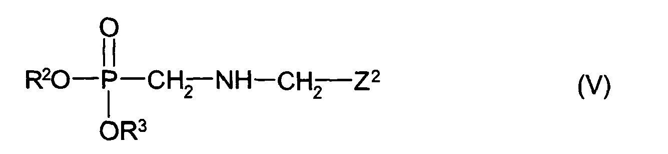 worin
   Z² einen Rest der Formel CN oder CO₂R¹ bedeutet, in dem R¹ = Q oder ein Salz bildendes Kation ist und dabei Q = H, Alkyl, Alkenyl, Alkoxyalkyl oder C₆-C₁₀-Aryl, das unsubstituiert oder substituiert ist und vorzugsweise unsubstituiert oder durch einen oder mehrere Reste aus der Gruppe Alkyl, Alkoxy, Halogen, CF₃, NO₂ und CN substituiert ist, und
   R²,R³ jeweils unabhängig voneinander H, Alkyl, C₆-C₁₀-Aryl, das unsubstituiert oder substituiert ist und vorzugsweise unsubstituiert oder durch einen oder mehrere Reste aus der Gruppe Alkyl, Alkoxy, Halogen, CF₃, NO₂ und CN substituiert ist, oder Biphenyl oder ein Salz bildendes Kation bedeuten.
   Beispiele für Wirkstoffe der Formel (IV) und (V) sind folgende:
   ◆ Glufosinate und dessen Ammoniumsalz in racemischer Form, d.h. 2-Amino-4-[hydroxy(methyl)phosphinoyl]-butansäure bzw. dessen Ammoniumsalz,
   ◆ das L-Enantiomer von Glufosinate und dessen Ammoniumsalz,
   ◆ Bilanafos/Bialaphos, d.h. L-2-Amino-4-[hydroxy(methyl)phosphinoyl]-butanoyl-L-alaninyl-L-alanin und dessen Natriumsalz
   ◆ Glyphosate.
M) Carbamate, z.B. Asulam, Carbetamide, Chloropham und Propham;
N) Benzofurane, z.B. Benfuresate und Ethofumesate;
O) Phytohormone;
P) Auxine und Auxinanaloga, z.B. 4-Indol-3-buttersäure, Indol-3-essigsäure, 1-Naphthylessigsäure, 2-(1-Naphthyl)acetamid und 2-Naphthyloxyessigsäure;
Q) Zytokinine, z.B. Cythokinin, Kinetin und 6-Benzylaminopurin;
R) Gibberelline, z.B. Gibberillinsäure, Gibberillin A4 und A7;
S) Absissinsäure- und deren Derivate;
T) Ethylenvorläufer, z.B. Ethephon;
U) Herbizide aus der Gruppe der Fettsäuresynthetase-Inhibitoren;
V) Harnstoffe, z.B. Chlorotoluron, Dimefuron, Diuron, Fluometuron, Isoproturon, Isouron, Karbutilate, Linuron, Methabenzthiazuron, Metobenzuron, Metoxuron, Monolinuron, Neburon, Siduron und Tebuthiuron und
W) Metamitron.

Die agrochemischen Wirkstoffe können auch Safener sein. Beispiele hierfür sind
a) Verbindungen vom Typ der Dichlorphenylpyrazolin-3-carbonsäure, vorzugsweise Verbindungen wie
   1-(2,4-Dichlorphenyl)-5-(ethoxycarbonyl)-5-methyl-2-pyrazolin-3-carbonsäureethylester (Mefenpyr-diethyl, Verbindung C1 -1) und verwandte Verbindungen, wie sie in der internationalen Anmeldung WO 91/07874 (PCT/EP 90102020) beschrieben sind;
b) Derivate der Dichlorphenylpyrazolcarbonsäure, vorzugsweise Verbindungen wie 1-(2,4-Dichlorphenyl)-5-methyl-pyrazol-3-carbonsäureethylester (Verbindung C1-2),
   1-(2,4-Dichlorphenyl)-5-isopropyl-pyrazol-3- carbonsäureethylester (Verbindung C1-3), 1-(2,4-Dichlorphenyl)-5-(1,1-dimethyl-ethyl)-pyrazol-3-carbonsäureethylester (Verbindung C1-4),
   1-(2,4-Dichlorphenyl)-5-phenyl pyrazol-3-carbonsäureethylester (Verbindung C1-5) und verwandte Verbindungen, wie sie in EP-A-0 333 131 und EP-A-0 269 806 beschrieben sind;
c) Verbindungen vom Typ der Triazolcarbonsäuren, vorzugsweise Verbindungen wie 1-(2,4-Dichlorphenyl)-5-trichlormethyl-(1 H)-1,2,4-triazol-3-carbonsäureethylester (Verbindung C1 -6, Fenchlorazol-ethyl) und verwandte Verbindungen (siehe EP-A-0 174 562 und EP-A-0 346 620);
d) Verbindungen vom Typ der Dichlorbenzyl-2-isoxazolin-3-carbonsäure, Verbindungen vom Typ der 5-Benzyl- oder
   5-Phenyl-2-isoxazolin-3- carbonsäure, vorzugsweise Verbindungen wie 5-(2,4-Dichlorbenzyl)-2-isoxazolin-3-carbonsäureethylester (Verbindung C1 -7) oder 5-Phenyl-2-isoxazolin-3-carbonsäureethylester (Verbindung C1-8) und verwandte Verbindungen wie sie in der internationalen Patentanmeldung WO 91/08202 (PCT/EP 90/01966) beschrieben sind;
e) Verbindungen vom Typ der 8-Chinolinoxyessigsäure, vorzugsweise Verbindungen wie
   (5-Chlor-8-chinolinoxy)-essigsäure-(1 -methyl-hex-1 -yl)-ester (Cloquintocet - mexyl, C2-1), (5-Chlor-8-chinolinoxy)-essigsäure-(1,3-dimethyl-but-1-yl)-ester (C2-2), (5-Chlor-8-chinolinoxy)-essigsäure-4-allyl-oxy-butylester (C2-3), (5-Chlor-8-chinolinoxy)-essigsäure-1-allyl-oxy-prop-2-ylester (C2-4), (5-Chlor-8-chinolinoxy)-essigsäureethylester (C2-5), (5-Chlor-8-chinolinoxy)-essigsäuremethylester (C2-6), (5-Chlor-8-chinolinoxy)-essigsäureallylester (C2-7), (5-Chlor-8-chinolinoxy)-essigsäure-2-(2-prpyliden-iminoxy)-1-ethylester (C2-8), (5-Chlor-8-chinolinoxy)-essigsäure-2-oxo-prop-1 -ylester (C2-9) und verwandte Verbindungen wie sie in EP-A-0 086 750, EP-A-0 094 349 und EP-A-0 191 736 oder EP-A-0 492 366 beschrieben sind;
f) Verbindungen vom Typ der (5-Chlor-8-chinolinoxy)-malonsäure, vorzugsweise Verbindungen wie (5-Chlor-8-chinolinoxy)-malonsäurediethylester, (5-Chlor-8-chinolinoxy)-malonsäurediallyester, (5-Chlor-8-chinolinoxy)-malonsäuremethylethylester und verwandte Verbindungen wie sie in der deutschen Patentanmeldung EP-A-0 582 198 beschrieben und vorgeschlagen worden sind;
g) Wirkstoffe vom Typ der Phenoxyessig- bzw. -propionsäurederivate bzw. der aromatischen Carbonsäuren, wie z. B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba);
h) Verbindungen vom Typ der 5,5-Diphenyl-2-isoxazolin-3-carbonsäure, vorzugsweise 5,5-Diphenyl-2-isoxazolin-3-carbonsäureethylester (Isoxadifen-ethyl, C3-1);
i) Verbindungen, die als Safener z.B. für Reis bekannt sind wie Fenclorim (= 4,6-Dichlor-2-phenylpyrimidin, Pesticide Manual, 12. Auflage, 1999, S. 386/387), Dimepiperate (= Piperidin-1 -thiocarbonsäure-S-1 -methyl-1 -phenylethylester, Pesticide Manual, 12. Auflage, 1999, S. 302/303), Daimuron (= 1-(1-Methyl-1-phenylethyl)-3-p-tolyl-harnstoff, Pesticide Manual, 12. Auflage, 1999, S. 247), Cumyluron (= 3-(2-Chlorphenylmethyl)-1 -(1 -methyl-1-phenyl-ethyl)- harnstoff, JP-A-60/087254), Methoxyphenon (= 3,3'-Dimethyl-4-methoxy- benzophenon, CSB (= 1-Brom-4-(chlormethylsulfonyl)-benzol, CAS-Reg. Nr. 54091-06-4).
   Die genannten Verbindungen sind außerdem zumindest teilweise in der EP-A-0 640 587 beschrieben, auf die hiermit zu Offenbarungszwecken Bezug genommen wird.
j) Eine weitere wichtige Gruppe von als Safenem und Antidoten geeigneten Verbindungen ist aus der WO 95107897 bekannt.
   Die agrochemischen Wirkstoffe können auch Wachstumsregulatoren sein. Beispiele hierfür sind Cyclanilide und Thidiazuron.

Die agrochemischen Wirkstoffe können auch Fungizide sein, beispielsweise
Inhibitoren der Nucleinsäure Synthese, insbesondere
   Benalaxyl, Benalaxyl-M, Bupirimat, Chiralaxyl, Clozylacon, Dimethirimol, Ethirimol, Furalaxyl, Hymexazol, Metalaxyl, Metalaxyl-M, Ofurace, Oxadixyl, Oxolinsäure
Inhibitoren der Mitose und Zellteilung, insbesondere
   Benomyl, Carbendazim, Diethofencarb, Fuberidazole, Pencycuron,
   Thiabendazol, Thiophanat-methyl, Zoxamid
Inhibitoren der Atmungskette Komplex I, insbesondere
   Diflumetorim
Inhibitoren der Atmungskette Komplex II, insbesondere
   Boscalid, Carboxin, Fenfuram, Flutolanil, Furametpyr, Mepronil, Oxycarboxin, Penthiopyrad, Thifluzamid
Inhibitoren der Atmungskette Komplex III, insbesondere
   Azoxystrobin, Cyazofamid, Dimoxystrobin, Enestrobin, Famoxadon, Fenamidon, Fluoxastrobin, Kresoximmethyl, Metominostrobin, Orysastrobin, Pyraclostrobin, Picoxystrobin, Trifloxystrobin
Entkoppler, insbesondere
   Dinocap, Fluazinam
Inhibitoren der ATP Produktion, insbesondere
   Fentinacetat, Fentinchlorid, Fentinhydroxid, Silthiofam
Inhibitoren der Aminosäure- und Proteinbiosynthese, insbesondere
   Andoprim, Blasticidin-S, Cyprodinil, Kasugamycin, Kasugamycinhydrochlorid Hydrat, Mepanipyrim, Pyrimethanil
Inhibitoren der Signal-Transduktion, insbesondere
   Fenpiclonil, Fludioxonil, Quinoxyfen
Inhibitoren der Fett- und Membran Synthese, insbesondere Chlozolinat, Iprodion, Procymidon, Vinclozolin
   Ampropylfos, Kalium-Ampropylfos, Edifenphos, Iprobenfos (IBP), Isoprothiolan, Pyrazophos
   Tolclofos-methyl, Biphenyl
   lodocarb, Propamocarb, Propamocarb hydrochlorid
Inhibitoren der Ergosterol Biosynthese, insbesondere
   Fenhexamid,
   Azaconazol, Bitertanol, Bromuconazol, Cyproconazol, Diclobutrazol, Difenoconazol, Diniconazol, Diniconazol-M, Epoxiconazol, Etaconazol, Fenbuconazol, Fluquinconazol, Flusilazol, Flutriafol, Furconazol, Furconazol-cis, Hexaconazol, Imibenconazol, Ipconazol, Metconazol, Myclobutanil, Paclobutrazol, Penconazol, Propiconazol, Prothioconazol, Simeconazol, Tebuconazol, Tetraconazol, Triadimefon, Triadimenol, Triticonazol, Uniconazol, Voriconazol, Imazalil, Imazalilsulfat, Oxpoconazol, Fenarimol, Flurprimidol, Nuarimol, Pyrifenox, Triforin, Pefurazoat, Prochloraz, Triflumizol, Viniconazol, Aldimorph, Dodemorph, Dodemorphacetat, Fenpropimorph, Tridemorph, Fenpropidin, Spiroxamin, Naftifin, Pyributicarb, Terbinafin
Inhibitoren der Zellwand Synthese, insbesondere
   Benthiavalicarb, Bialaphos, Dimethomorph, Flumorph, Iprovalicarb, Polyoxins, Polyoxorim, Validamycin A
Inhibitoren der Melanin Biosynthese, insbesondere
   Capropamid, Diclocymet, Fenoxanil, Phtalid, Pyroquilon, Tricyclazol
Resistenzinduktoren, insbesondere
   Acibenzolar-S-methyl, Probenazol, Tiadinil
Multisite, insbesondere
   Captafol, Captan, Chlorothalonil, Kupfersalze wie: Kupferhydroxid, Kupfemaphthenat, Kupferoxychlorid, Kupfersulfat, Kupferoxid, Oxin-Kupfer und Bordeaux Mischung, Dichlofluanid, Dithianon, Dodin, Dodin freie Base, Ferbam, Folpet, Fluorofolpet, Guazatin, Guazatinacetat, Iminoctadin, Iminoctadinalbesilat, Iminoctadintriacetat, Mankupfer, Mancozeb, Maneb, Metiram, Metiram Zink, Propineb, Schwefel und Schwefelpräparate enthaltend Calciumpolysulphid, Thiram, Tolylfluanid, Zineb, Ziram
Fungizide mit unbekannten Mechanismus, insbesondere
   Amibromdol, Benthiazol, Bethoxazin, Capsimycin, Carvon, Chinomethionat, Chloropicrin, Cufraneb, Cyflufenamid, Cymoxanil, Dazomet, Debacarb, Diclomezine, Dichlorophen, Dicloran, Difenzoquat, Difenzoquat Methylsulphat, Diphenylamin, Ethaboxam, Ferimzon, flumetover, Flusulfamid, Fluopicolid, Fluoroimid, Hexachlorobenzol, 8-Hydroxychinolinsulfat, Irumamycin, Methasulphocarb, Metrafenon, Methyl Isothiocyanat, Mildiomycin, Natamycin, Nickel dimethyldithiocarbamat, Nitrothal-isopropyl, Octhilinon, Oxamocarb, Oxyfenthiin, Pentachlorophenol und Salze, 2-Phenylphenol und Salze, Piperalin, Propanosin -Natrium, Proquinazid, Pyrrolnitrin, Quintozen, Tecloftalam, Tecnazen, Triazoxid, Trichlamid, Zarilamid und 2,3,5,6-Tetrachlor-4-(methylsulfonyl)-pyridin, N-(4-Chlor-2-nitrophenyl)-N-ethyl-4-methyl-benzenesulfonamid, 2-Amino-4-methyl-N-phenyl-5-thiazolecarboxamid, 2-Chlor-N-(2,3-dihydro-1,1,3-trimethyl-1 H-inden-4-yl)-3-pyridincarboxamid, 3-[5-(4-Chlorphenyl)-2,3-dimethylisoxazolidin-3-yl]pyridin, cis-1-(4-Chlorphenyl)-2-(1H-1,2,4-tnazol-1-yl)-cydoheptanol, 2,4-Dihydro-5-methoxy-2-methyl-4-[[[[1-[3-(trifluoromethyl)-phenyl]-ethyliden]-amino]-oxy]-methyl]-phenyl]-3H-1,2,3-triazol-3-on (185336-79-2), Methyl 1-(2,3-dihydro-2,2-dimethyl-1H-inden-1-yl)-1H-imidazole-5-carboxylat, 3,4,5-Trichlor-2,6-pyridindicarbonitril, Methyl 2-[[[cyclopropyl[(4-methoxyphenyl)imino]methyl]thio]methyl]-.alpha.-(methoxymethylen)- benzacetat, 4-Chlor-alpha-propinyloxy-N-[2-[3-methoxy-4-(2-propinyloxy)phenyl]ethyl]-benzacetamide, (2S)-N-[2-[4-[[3-(4-chiorophenyt)-2-propinyl]oxy]-3-methoxyphenyl]ethyl]- 3-methyl-2-[(methylsulfonyl)amino]-butanamid, 5-Chlor-7-(4-methylpiperidin-1-yl)-6-(2,4,6-trifluorophenyl)[1,2,4]triazolo[1,5-a]pyrimidin, 5-Chlor-6-(2,4,6-trifluorophenyl)-N-[(1R)-1,2,2-trimethylpropyl][1,2,4]triazolo[1,5-a]pyrimidin-7-amin, 5-Chlor-N-[(1R)-1,2-dimethylpropyl]-6-(2,4,6-trifluorophenyl)[1,2,4]triazolo[1,5-a]pyrimidin-7-amine, N-[1-(5-Brom-3-chloropyridin-2-yl)ethyl]-2,4-dichloronicotinamid, N-(5-Brom-3-chlorpyridin-2-yl)methyl-2,4-dichlornicotinamid, 2-Butoxy-6-iod-3-propyl-benzopyranon-4-on, N-{(Z)-[(cyclopropylmethoxy) imino][6-(difluormethoxy)-2,3-difluorphenyl]methyl}-2-benzacetamid, N-(3-Ethyl-3,5,5-trimethyl-cyclohexyl)-3-formylamino-2-hydroxy-benzamid, 2-[[[[1-[3(1 Fluor-2-phenylethyl)oxy] phenyl] ethyliden]amino]oxy]methyl]-alpha-(methoxyimino)-N-methyl-alphaE-benzacetamid, N-{2-[3-Chlor-5-(trifluormethyl)pyridin-2-yl]ethyl}-2-(trifluoromethyl)benzamid, N-(3',4'-dichlor-5-fluorbiphenyl-2-yl)3-(difluormethyl)-1-methyl-1 H-pyrazol-4-carboxamid, N-(6-Methoxy-3-pyridinyl)-cyclopropan carboxamid, 1-[(4-Methoxyphenoxy)methyl]-2,2-dimethylpropyl-1 H-imidazol-1- carbonsäure, O-[1-[(4-Methoxyphenoxy)methyl]-2,2-dimethylpropyl]-1 H-imidazol-1- carbothioic acid, 2-(2-{[6-(3-Chlor-2-methylphenoxy)-5-fluorpyrimidin-4-yl]oxy}phenyl)-2-(methoxyimino)-N-methylacetamid

Die agrochemischen Wirkstoffe können auch Bakterizide sein, beispielsweise Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

Die agrochemischen Wirkstoffe können auch Insektizide / Akarizide und/oder Nematizide sein, beispielsweise

Acetylcholinesterase (AChE) Inhibitoren
Carbamate,
zum Beispiel Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Formetanate, Furathiocarb, Isoprocarb, Metamsodium, Methiocarb, Methomyl, Metolcarb, Oxamyl, Pirimicarb, Promecarb, Propoxur, Thiodicarb, Thiofanox, Trimethacarb, XMC, Xylylcarb, Triazamate Organophosphate,
zum Beispiel Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, lodofenphos, lprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion

Natrium-Kanal-Modulatoren / Spannungsabhängige Natrium-Kanal-Blocker Pyrethroide,
zum Beispiel Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin,
Cis-Permethrin, Clocythrin, Cycloprothrin, Cyfluthrin, Cyhalothrin, Cypermethrin (alpha-, beta-, theta-, zeta-), Cyphenothrin, Deltamethrin, Empenthrin (1 R-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda- Cyhalothrin, Metofluthrin, Permethrin (cis-, trans-), Phenothrin (1 R-trans isomer), Prallethrin, Profluthrin, Protrifenbute, Pyresmethrin, Resmethrin, RU 15525, Silafluofen, Tau-Fluvalinate, Tefluthrin, Terallethrin, Tetramethrin (-1 R- isomer), Tralomethrin, Transfluthrin, ZXI 8901, Pyrethrins (pyrethrum)
DDT
Oxadiazine,
zum Beispiel Indoxacarb
Semicarbazon,
zum Beispiel Metaflumizon (BAS3201)
Acetylcholin-Rezeptor-Agonisten/-Antagonisten
   Chloronicotinyle,
   zum Beispiel Acetamiprid, Clothianidin, Dinotefuran, Imidacloprid, Nitenpyram,
   Nithiazine, Thiacloprid, Thiamethoxam
   Nicotine, Bensultap, Cartap
Acetylcholin-Rezeptor-Modulatoren
   Spinosyne,
   zum Beispiel Spinosad
GABA-gesteuerte Chlorid-Kanal-Antagonisten
   Organochlorine,
   zum Beispiel Camphechlor, Chlordane, Endosulfan, Gamma-HCH, HCH,
   Heptachlor, Lindane, Methoxychlor
   Fiprole,
   zum Beispiel Acetoprole, Ethiprole, Fipronil, Pyrafluprole, Pyriprole,
   Vaniliprole
Chlorid-Kanal-Aktivatoren
   Mectine,
   zum Beispiel Abamectin, Emamectin, Emamectin-benzoate, Ivermectin,
   Lepimectin, Milbemycin
Juvenilhormon-Mimetika,
   zum Beispiel Diofenolan, Epofenonane, Fenoxycarb, Hydroprene, Kinoprene,
   Methoprene, Pyriproxifen, Triprene
Ecdysonagonisten/disruptoren
   Diacylhydrazine,
   zum Beispiel Chromafenozide, Halofenozide, Methoxyfenozide, Tebufenozide
Inhibitoren der Chitinbiosynthese
   Benzoylharnstoffe,
   zum Beispiel Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron
   Buprofezin
   Cyromazine
Inhibitoren der oxidativen Phosphorylierung, ATP-Disruptoren
   Diafenthiuron
   Organozinnverbindungen,
   zum Beispiel Azocyclotin, Cyhexatin, Fenbutatin-oxide
Entkoppler der oxidativen Phoshorylierung durch Unterbrechung des H-Protongradienten
   Pyrrole,
   zum Beispiel Chlorfenapyr
   Dinitrophenole,
   zum Beispiel Binapacyrl, Dinobuton, Dinocap, DNOC
Site-I-Elektronentransportinhibitoren
   METI's,
   zum Beispiel Fenazaquin, Fenpyroximate, Pyrimidifen, Pyridaben, Tebufenpyrad, Tolfenpyrad
   Hydramethylnon
   Dicofol
Site-II-Elektronentransportinhibitoren
   Rotenone
Site-III-Elektronentransportinhibitoren
   Acequinocyl, Fluacrypyrim
Mikrobielle Disruptoren der Insektendarmmembran
   Bacillus thuringiensis-Stämme
Inhibitoren der Fettsynthese
   Tetronsäuren,
   zum Beispiel Spirodiclofen, Spiromesifen
   Tetramsäuren,
   zum Beispiel Spirotetramat
   Carboxamide,
   zum Beispiel Flonicamid
   Oktopaminerge Agonisten,
   zum Beispiel Amitraz
Inhibitoren der Magnesium-stimulierten ATPase,
   Propargite
   Nereistoxin-Analoge,
   zum Beispiel Thiocyclam hydrogen oxalate, Thiosultap-sodium
Agonisten des Ryanodin-Rezeptors,
   Benzoesäuredicarboxamide,
   zum Beispiel Flubendiamid
   Anthranilamide,
   zum Beispiel DPX E2Y45 (3-bromo-N-{4-chloro-2-methyl-6-[(methylamino)carbonyl]phenyl}-1-(3-chloropyridin-2-yl)-1H-pyrazole-5-carboxamide)
Biologika, Hormone oder Pheromone
   Azadirachtin, Bacillus spec., Beauveria spec., Codlemone, Metarrhizium spec., Paecilomyces spec., Thuringiensin, Verticillium spec.
Wirkstoffe mit unbekannten oder nicht spezifischen Wirkmechanismen
   Fraßhemmer,
   zum Beispiel Cryolite, Flonicamid, Pymetrozine
   Milbenwachstumsinhibitoren,
   zum Beispiel Clofentezine, Etoxazole, Hexythiazox
   Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure,
   Metoxadiazone, Petroleum, Piperonyl butoxide, Potassium oleate, Pyridalyl,
   Sulfluramid, Tetradifon, Tetrasul, Triarathene,Verbutin.

Bevorzugte Beispiele für die in den erfindungsgemäßen Schmelzgranulaten enthaltenen agrochemischen Wirkstoffe sind:
Acetochlor, Aclonifen, Alachlor, Amidochlor, Amidosulfuron, Bensulfuron-methyl, Bitertanol, Bromoxynil-octanoat, Butachlor, Chlormequat-chlorid, Chlorsulfuron, Cinosulfuron, Clodinafop-propargyl, Cypermethrin, 2,4-D-Ester, 2,4-DB-Ester, 2,4-DP-Ester, CMPP-Ester, MCPA-Ester, Deltamethrin, Desmedipham, Diclofop-methyl, Diflufenican, Ethofumesat, Fenxoapropethyl, Fipronil, Fluoroglykofen, Foramsulfuron, Glufosinate, Imazapyr, Imazosulfuron, lodosulfuron-methyl, Imidacloprid, loxyniloctanoat, Isoxaflutol, Lactofen, Mesosulfuron-methyl, Metolachlor, Metsulfuron-methyl, Metamitron, Nicosulfuron, Oxyfluorfen, Pendimethalin, Phenmedipham, Pinoxaden, Primisulfuron-methyl, Propaquizafop, Pyrazosulfuron-methyl, Rimsulfuron, Tebuconazole, Triflusulfuron-methyl, Trifloxystrobin, Trifluralin, lodosulfuron, Prochloraz, Amitraz, Oxazinon, Oxadiargyl, Metamitron, Mefenpyr-diethyl, Phenmedipham, Desmedipham und Isoxadifen-ethyl, und deren Salze, z.B. die Natriumsalze.

Besonders bevorzugte agrochemische Wirkstoffe sind Glufosinate, lodosulfuron-methyl, Metolachlor und deren Salze, z.B. die Ammonium- und Natriumsalze.

In den erfindungsgemäßen Schmelzgranulaten enthaltene Tenside b) sind z.B. Tenside auf nichtaromatischer Basis, z.B. auf Heterocyclen-, Olefin-, Aliphaten- oder Cycloaliphatenbasis, beispielsweise oberflächenaktive mit einer oder mehreren Alkylgruppen substituierte und nachfolgend derivatisierte, z.B. alkoxylierte, sulfatierte, sulfonierte oder phosphatierte Pyridin-, Pyrimidin-, Triazin-, Pyrol-, Pyrolidin-, Furan-, Thiophen-, Benzoxazol-, Benzthiazol- und Triazolverbindungen, und/oder Tenside auf aromatischer Basis, z.B. mit einer oder mehreren Alkylgruppen substituierte und nachfolgend derivatisierte, z.B. alkoxylierte, sulfatierte, sulfonierte oder phosphatierte Benzole oder Phenole. Die Tenside b) sind im allgemeinen in der Lösungsmittelphase löslich und geeignet, diese - zusammen mit darin gelösten Wirkstoffen - bei Verdünnung mit Wasser (zur Spritzbrühe) zu emulgieren. Die erfindungsgemäßen Tensid/ Lösungsmittelgemische können z.B. nicht aromatische oder aromatische Tenside oder Mischungen von nichtaromatischen und aromatischen Tensiden enthalten.

Beispiele für Tenside b) sind nachfolgend aufgeführt, worin EO=EthylenoxidEinheiten, PO=Propylenoxid-Einheiten und BO=Butylenoxid-Einheiten bedeutet:
b1) C₁₀-C₂₄-Alkohole, die alkoxyliert sein können, z.B. mit 1 - 60 Alkylenoxideinheiten, vorzugsweise 1-60 EO und/oder 1-30 PO und/oder 1-15 BO in beliebiger Reihenfolge. Die terminalen Hydroxygruppen dieser Verbindungen können durch einen Alkyl-, Cycloalkyl-oder Acylrest mit 1-24 Kohlenstoffatomen endgruppen verschlossen sein. Beispiele für derartige Verbindungen sind:
   Genapol^{®}C-, L-, O-, T-, UD-, UDD-, X-Produkte von Clariant, Plurafac^{®}- und
   Lutensol^{®}A-, AT-, ON-, TO-Produkte von BASF, Marlipal^{®}24- und 013
   Produkte von Condea, Dehypon^{®}-Produkte von Henkel, Ethylan^{®}-Produkte von Akzo-Nobel, wie Ethylan CD 120.
b2) Anionische Derivate der unter b1) beschriebenen Produkte in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis), wie Genapol^{®}LRO, Sandopan^{®}-Produkte und Hostaphat/Hordaphos^{®}-Produkte von Clariant.
   Copolymere bestehend aus EO, PO und/oder BO Einheiten, zum Beispiel Blockcopolymere, wie die Pluronic^{®}-Produkte von BASF und die Synperonic^{®}-Produkte von Uniquema mit einem Molekulargewicht von 400 bis 10⁸. Alkylenoxydaddukte von C₁ - C₉ Alkoholen wie Atlox^{®}5000 von Uniquema oder Hoe^{®}-S3510 von Clariant.
b3) Fettsäure- und Triglyceridalkoxylate, wie die Serdox^{®}NOG-Produkte von Condea oder alkoxylierte Pflanzenöle, wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl, wobei unter den Pflanzenölen auch deren Umesterungsprodukte verstanden werden, z.B. Alkylester, wie Rapsölmethylester oder Rapsölethylester, beispielsweise die Emulsogen^{®}-Produkte von Clariant, Salze von aliphatischen,cycloaliphatischen und olefinischen Carbonsäuren und Polycarbonsäuren, sowie Alpha-Sulfofettsäureester, wie z.B. von der Firma Henkel erhältlich.
b4) Fettsäureamidalkoxylate, wie die Comperlan^{®}-Produkte von Henkel oder die Amam^{®}-Produkte von Rhodia.
   Alkylenoxydaddukte von Alkindiolen, wie die Surfynol^{®}-Produkte von Air Products. Zuckerderivate, wie Amino- und Amidozucker von Clariant, Glukitole von Clariant, Alkylpolyglycoside in Form der APG^{®}-Produkte von Henkel oder wie Sorbitanester in Form der Span^{®}- oder Tween^{®}-Produkte von Uniquema oder Cyclodextrinester oder -ether von Wacker.
b5) Oberflächenaktive Cellulose- und Algin-, Pektin- und Guarderivate, wie die Tylose^{®}-Produkte von Clariant, die Manutex^{®}-Produkte von Kelco und Guarderivate von Cesalpina.
   Alkylenoxydaddukte auf Polyolbasis wie Polyglykol^{®}-Produkte von Clariant. Grenzflächenaktive Polyglyceride und deren Derivate von Clariant.
b6) Sulfosuccinate , Alkansulfonate, Paraffin- und Olefinsulfonate, wie Netzer IS^{®}, Hoe^{®}S1728, Hostapur^{®}OS, Hostapur^{®}SAS von Clariant, Triton^{®}GR7ME und GR5 von Union Carbide, Empimin^{®}-Produkte von Albright und Wilson, Madon^{®}-PS65 von Condea.
b7) Sulfosuccinamate, wie die Aerosol^{®}-Produkte von Cytec oder die Empimin^{®}-Produkte von Albright und Wilson.
b8) Alkylenoxidaddukte von Fettaminen, quartäre Ammonium-Verbindungen mit 8 bis 22 Kohlenstoffatomen (C₈-C₂₂), wie die Genamin^{®}C,L,O,T-Produkte von Clariant.
b9) Oberflächenaktive, zwitterionische Verbindungen, wie Tauride (z.B. N-Alkyltauride), Betaine und Sulfobetaine in Form von Tegotain^{®}-Produkte von Goldschmidt, Hostapon^{®}T- und Arkopon^{®}T-Produkte von Clariant.
b10) Oberflächenaktive Verbindungen auf Silikon- bzw. Silanbasis, wie die Tegopren^{®}-Produkte von Goldschmidt und die SE^{®}-Produkte von Wacker, sowie die Bevaloid^{®}- ,Rhodorsil^{®}- und Silcolapse^{®}-Produkte von Rhodia (Dow Corning, Reliance, GE, Bayer).
b11) Per- oder polyftuorierte oberflächenaktive Verbindungen, wie Fluowet^{®}-Produkte von Clariant, die Bayowet^{®}-Produkte von Bayer, die Zonyl^{®}-Produkte von DuPont und Produkte dieser Art von Daikin und Asahi Glass.
b12) Grenzflächenaktive Sulfonamide z.B. von Bayer.
b13) Grenzflächenaktive Polyacryl- und Polymethacrylderivate, wie die Sokalan^{®}-Produkte von BASF.
b14) Oberflächenaktive Polyamide, wie modifizierte Gelatine oder derivatisierte Polyasparginsäure von Bayer und deren Derivate.
b15) Tensidische Polyvinylverbindungen, z.B. modifiziertes Polyvinylpyrollidon, wie die Luviskol^{®}-Produkte von BASF und die Agrimer^{®}-Produkte von ISP oder die derivatisierten Polyvinylacetate wie die Mowilith^{®}-Produkte von Clariant oder die -butyrate, wie die Lutonal^{®}-Produkte von BASF, die Vinnapas^{®}- und die Pioloform^{®}-Produkte von Wacker oder modifizierten Polyvinylalkohole, wie die Mowiol^{®}-Produkte von Clariant.
b16) Oberflächenaktive Polymere auf Basis von Maleinsäureanhydrid und/oder Umsetzungsprodukten von Maleinsäureanhydrid, sowie Maleinsäureanhydrid und/oder Umsetzungsprodukte von Maleinsäureanhydrid beinhaltende Copolymere, wie die Agrimer^{®}-VEMA-Produkte von ISP.
b17) Oberfächenaktive Derivate von Montan-, Polyethylen-, und Polypropylenwachsen wie die Hoechst^{®}-wachse oder die Licowet^{®}-Produkte von Clariant.
b18) Oberflächenaktive Phosphonate und Phosphinate, wie Fluowet^{®}-PL von Clariant.
b19) Poly- oder perhalogenierte Tenside, wie Emulsogen^{®}-1557 von Clariant.
b20) Phenole, die alkoxyliert sein können, beispielsweise Phenyl-(C₁-C₄)alkyl-ether oder (poly)alkoxylierte Phenole [= Phenol-(poly)alkylenglykolether], beispielsweise mit 1 bis 50 Alkylenoxy-Einheiten im (Poly)alkylenoxyteil, wobei der Alkylenteil vorzugsweise jeweils 1 bis 4 C-Atome aufweist, vorzugsweise mit 3 bis 10 mol Alkylenoxid umgesetztes Phenol, (Poly)alkylphenole oder (Poly)alkylphenolalkoxylate [= Polyalkylphenol-(poly)alkylenglykolether], beispielsweise mit 1 bis 12 C-Atomen pro Alkylrest und 1 bis 150 Alkylenoxy-Einheiten im Polyalkylenoxyteil, vorzugsweise mit 1 bis 50 mol Ethylenoxid umgesetztes Tri-n-butylphenol oder Triisobutylphenol, Polyarylphenole oder Polyarylphenolalkoxylate [= Polyarylphenol-(poly)alkylenglykolether], beispielsweise Tristyrylphenolpolyalkylenglykolether mit 1 bis 150 Alkylenoxy-Einheiten im Polyalkylenoxyteil, vorzugsweise mit 1 bis 50 mol Ethylenoxid umgesetztes Tristyrylphenol.
b21) Verbindungen, die formal die Umsetzungsprodukte der unter b20) beschriebenen Moleküle mit Schwefelsäure oder Phosphorsäure darstellen und deren mit geeigneten Basen neutralisierte Salze, beispielsweise der saure Phosphorsäureester des dreifach ethoxylierten Phenols, der saure Phosphorsäureester eines mit 9 mol Ethylenoxid umgesetzten Nonylphenols und der mit Triethanolamin neutralisierte Phosphorsäureester des Reaktionsproduktes von 20 mol Ethylenoxid und 1 mol Tristyrylphenol.
b22) Aromatische Sulfonate wie Naphthalinsulfonate (z.B. Alkylnaphthalinsulfonate wie Monoalkyl- oder Dialkylnaphthalinsulfonate) oder Benzolsulfonate wie Alkyl- oder Arylbenzolsulfonate, z.B. saure und mit geeigneten Basen neutralisierte (Poly)alkyl- und (Poly)aryl-benzolsulfonate, beispielsweise mit 1 bis 12 C-Atomen pro Alkylrest bzw. mit bis zu 3 Styroleinheiten im Polyarylrest, vorzugsweise (lineare) Dodecylbenzolsulfonsäure und deren öl-lösliche Salze, beispielsweise das Calciumsalz oder das lsopropylammoniumsalz der Dodecylbenzolsulfonsäure.

Bei den Alkylenoxyeinheiten sind Ethylenoxy-, Propylenoxy- und Butylenoxyeinheiten, insbesondere Ethylenoxyeinheiten bevorzugt.

Beispiele für Tenside aus der Gruppe der Tenside auf nichtaromatischer Basis sind die Tenside der vorstehend genannten Gruppen b1) bis b19), vorzugsweise der Gruppen b1), b2), b6) und b8).

Beispiele für Tenside aus der Gruppe der Tenside auf Aromatenbasis sind die Tenside der vorstehend genannten Gruppen b20)-b22) vorzugsweise
mit 4 bis 10 mol Ethylenoxid umgesetztes Phenol, kommerziell beispielsweise in Form der Agrisol^{®}-Produkte (Akcros) erhältlich,
mit 4 bis 50 mol Ethylenoxid umgesetztes Triisobutylphenol, kommerziell beispielsweise in Form der Sapogenat^{®} T-Produkte (Clariant) erhältlich,
mit 4 bis 50 mol Ethylenoxid umgesetztes Nonylphenol, kommerziell beispielsweise in Form der Arkopal^{®}-Produkte (Clariant) erhältlich,
mit 4 bis 150 mol Ethylenoxid umgesetztes Tristyrylphenol, beispielsweise aus der Soprophor^{®}-Reihe wie Soprophor^{®} FL, Soprophor^{®} 3D33, Soprophor^{®} BSU, Soprophor^{®} 4D-384, Soprophor^{®} CY/8 (Rhodia), und
saures (lineares) Dodecylbenzolsulfonat, kommerziell beispielsweise in Form der Madon^{®}-Produkte (Hüls) erhältlich.

Bevorzugte Tenside (b) sind z.B. alkoxylierte C₁₀-C₂₄-Alkohole (b1) und deren anionische Derivate (b2) wie Sulfate, Sulfonate und Phosphate, alkoxylierte Pflanzenöle (b3), Alkansulfonate (b6), Tauride wie N-Alkyltauride (b9), alkoxylierte Phenole (b20) und deren Umsetzungprodukte mit Schwefelsäure oder Phosphorsäure (b21), aromatische Sulfonate wie Alkylnaphthalinsulfonate und Alkylbenzolsulfonate (b22).

Als Bindemittel c) sind Saccharide und Polyethlenglykole mit einem Molekulargewicht von mindestens 15000 bevorzugt, die bei Normalbedingungen einen Schmelzpunkt von mindestens 50°C, besonders bevorzugt mindestens 60°C, aufweisen.

Bevorzugt als Saccharide sind Zuckeralkohole, Monosaccharide, Disaccharide und Polysaccharide.

Bevorzugte Zuckeralkohole sind Hexite, insbesondere Xylit und Sorbit, und Pentite.

Bevorzugte Monosaccharide sind Hexoaldosen, insbesondere Glucose und Galaktose, Hexoketosen, insbesondere Fructose, und Pentoaldosen, insbesondere Ribose.

Bevorzugte Disaccharide sind reduzierende Disaccharide, insbesondere Maltose, Cellobiose und Laktose, und nicht reduzierende Disaccharide, insbesondere Saccharose.

Bevorzugte Polysaccharide sind Dextrine, insbesondere Amylodextrin, Erythrodextrin und Achrodextrin, und Cellulose, insbesondere mikrokristalline Cellulose.

Diese Bindemittel sind bekannt und kommerziell erhältlich, mikrokristalline Cellulose beispiels unter der Bezeichnung Avicel PH101^{®}.

Als Polyethylenglykole mit einem Molekulargewicht (Mw) von mindestens 15000 sind Handelsprodukte bevorzugt, die z.B. unter der Bezeichnung PEG20 000 erhältlich sind.

Die Bindemittel liegen in Form einer erstarrten Schmelze vor, d.h. sie sind nach einem Aufheizen über ihren Schmelzpunkt wieder unter den Schmelzpunkt abgekühlt.

Bevorzugte Träger (d) sind Silikate, Kreiden, Gips oder anorganische wasserlösliche Salze.

Von den Silikaten bevorzugt sind hochsaugfähige Silikate und niedrig saugfähige Silikate.

Bevorzugte hochsaugfähige Silikate sind pyrogene Kieselsäuren, beispielsweise die Aerosil Marken, Fällungs-Kieselsäuren, beispielsweise die Sipernat^{®} Marken (Degussa, Deutschland), wie Sipernat^{®} 50S und CalFlo E, und Aerogele, beispielsweise Fa. Cabot.

Bevorzugte niedrig saugfähige Silikate sind Diatomeenerde (Kieselgur), Sand, Kaoline, thermisch expandiertes Perlit und Alumosilikate, beispielsweise Kaolin 1777 (Wunsiedeln).

Bevorzugte Kreiden sind Omya^{®} Kreiden (Omya Group.

Ein weiterhin bevorzugter Träger ist Gips.

Als organisch wasserlösliche Salze sind bevorzugt Natrium- und Ammoniumsulfat.

Die in den erfindungsgemäßen Schmelzgranulaten gegebenenfalls enthaltenen üblichen Hilfs- und Zusatzstoffe e) sind im Prinzip bekannt und beispielsweise in Standardwerken beschrieben: McCutcheon's "Detergents and Emulsifiers Annual", MC Publ. Corp., Ridgewood N.J.; Sisley and Wood, "Encyclopedia of Surface active Agents", Chem. Pubi.Co.Inc., N.Y. 1964; Schönfeldt, "Grenzflächenaktive Äthylenoxidaddukte", Wiss. Verlagsgesellschaft, Stuttgart 1976; Winnacker-Küchler, "Chemische Technologie", Band 7, C.Hanser-Verlag, München, 4.Auflage 1986.

Als übliche Hilfs- und Zusatzstoffe e) können z.B. enthalten sein: Verdickungs- und Thixotropiermittel, Netz-, Anti-Drift-, Haft-, Penetrations-, Konservierungs- und Frostschutzmittel, Antioxidantien, Farbstoffe, Riechstoffe, Entschäumer, Düngemittel, Verdunstungshemmer, sowie den pH-Wert und die Viskosität beeinflussende Mittel.

Bevorzugt sind erfindungsgemäße Schmelzgranulate, insbesondere von agrochemischen wie herbiziden, insektiziden oder fungiziden Wirkstoffen, enthaltend
a) 0,01 bis 80 Gew.-%, vorzugsweise 1 bis 60 Gew.-%, besonders bevorzugt 2 bis 50 Gew.-% Wirkstoffe, vorzugsweise agrochemischer Wirkstoffe,
b) 1 bis 60 Gew.-%, vorzugsweise 2 bis 40 Gew.-%, besonders bevorzugt 2 bis 30 Gew.-% Tenside,
c) 1 bis 80 Gew.-%, vorzugsweise 2 bis 60 Gew.-%, besonders bevorzugt 3 bis 50 Gew.-% Bindemittel,
d) 2 bis 75 Gew.-%, vorzugsweise 5 bis 70 Gew.-%, besonders bevorzugt 7 bis 60 Gew.-% Trägerstoffe, und
e) gegebenenfalls 1 bis 85 Gew.-%, vorzugsweise 2 bis 70 Gew.-%, besonders bevorzugt 3 bis 50 Gew.-% an üblichen Hilfs- und Zusatzstoffen.
   Die Erfindung betrifft weiterhin Verfahren zur Herstellung der erfindungsgemäßen Schmelzgranulate. Hierzu kommen z.B. ein Sprühgranulierverfahren oder ein Wirbelschichtverfahren in Frage.

Solche Verfahren sind in allgemeiner Form bespielsweise in Winnacker-Küchler, Chemische Technologie, 4. Auflage, Seite 228 (Sprühtrocknung) und S. 385 f (Wirbelschichtgranulierung), C.Hanser Verlag, München 1984, beschrieben.

Bevorzugt ist ein Wirbelschichtverfahren (z.B. kontinuierlich oder diskontinuierlich), das es ermöglicht, Schmelzgranulate in einem Arbeitsgang herzustellen. Die einzelnen Komponenten werden dabei in den gewünschten Mengenverhältnissen (also Wirksubstanzen, Schmelzbindemittel, Tenside und Hilfsmittel) chargenweise vorgelegt oder als Mischung kontinuierlich zugefahren (und dann entsprechend ausgetragen) und dabei mit heisser Luft (oder einem inerten Gas wie Stickstoff) aufgewirbelt und aufgeheizt. Dabei kann die Luftzufuhrtemperatur 40 bis 400°C betragen, vorzugsweise 60 bis 250°C. Wird die Schmelztemperatur des/der Bindemittel erreicht, setzt die Agglomerierung der aufgewirbelten Partikel ein.
Hierbei lässt sich z.B. durch die Verweildauer die Granulatpartikelgrößenverteilung beinflussen.

Durch Umschalten auf kalte Luft (mindestens 20°C unter dem Erweichungs- bzw. Schmelzpunkt der Bindemittel) lassen sich der Agglomerierungsprozess unterbinden und die so gebildeten, abgekühlten Schmelzgranulate austragen. Dieses Verfahren kann sowohl kontinuierlich wie auch diskontinuierlich betrieben werden. Bei kontinuierlich betriebenem Prozess benutzt man beispielsweise eine schräg nach unten verlaufende Kammer, so dass die größeren Partikel oder Granulate (abhängig von der Wirbelluftstärke) nach unten in eine kühlere Zone fallen. Gefüttert werden kann dieses System beispielsweise mit einer Dosierschnecke, die das zu granulierende Gemisch einspeist.

Die erfindungsgemäßen Schmelzgranulate agrochemischer Wirkstoffe können in Wasser wässrige Spritzbrühen bilden, die bei der Anwendung auch biologisch vorteilhafte Resultate aufweisen. Dabei wird eine wirksame Menge der Formulierung auf die Schadorganismen oder die Orte, an denen sie auftreten, appliziert, z.B. auf die Pflanze, Pflanzenteile, Pflanzensamen oder die Fläche auf der die Pflanzen wachsen, z.B. die Anbaufläche.

Die erfindungsgemässen Schmelzgranulate gehen in Wasser sehr gut auf und lassen sich in die Ölphase von Emulsionskonzentraten, Öldipersionen oder Suspoemulsionen dispergieren. Hierdurch können verschiedene Wirkstoffe (auch wenn sie chemische Unverträglichkeit zeigen) miteinander in einer Fertigformulierung vereint werden.

Die Aufwandmengen der agrochemischen Wirkstoffen (a) liegen im allgemeinen zwischen 10 und 2000 g AS/ha (AS = Aktivsubstanz, d. h. Aufwandmenge bezogen auf den aktiven Wirkstoff), bevorzugt zwischen 50 und 1000 g AS/ha.

Weiterhin Gegenstand der Erfindung ist ein Verfahren zur Bekämpfung von Schadorganismen, vorzugsweise schädlichen Pflanzen, Tieren und, vorzugsweise pflanzenpathogenen, Mikroorganismen, vorzugsweise Pilzen, wobei ein oben beschriebenes erfindungsgemäßes Schmelzgranulat, bevorzugt als wässrige Spritzbrühe und bevorzugt in einer wirksamen Menge, auf die Schadorganismen oder deren Lebensraum aufgebracht wird.

Im Falle von Schadpflanzen ist das Aufbringen auf die Schadpflanze, im Falle von schädlichen Tieren und Mikroorganismen das Aufbringen auf vor diesen Schadorganismen zu schützende Pflanzen bevorzugt. Verfahren zur therapeutischen Anwendung bei Mensch und Tier sind dabei ausgeschlossen.

Die erfindungsgemäß behandelten Pflanzen sind, soweit es den Einsatz von Herbiziden betrifft, alle Arten von Schadpflanzen, wie Unkräuter. Was den Schutz von Kulturpflanzen durch Applikation von beispielsweise Fungiziden und Insektiziden betrifft, ist die Anwendung in wirtschaftlich bedeutenden, beispielsweise auch transgenen Kulturen von Nutz- und Zierpflanzen, z.B. von Getreide, wie Weizen, Gerste, Roggen, Hafer, Hirse, Reis, Maniok und Mais, oder auch Kulturen von
Erdnuss, Zuckerrübe, Baumwolle, Soja, Raps, Kartoffel, Tomate, Erbse und anderen Gemüsesorten bevorzugt.

Weiterhin Gegenstand der Erfindung ist die Verwendung eines erfindungsgemäßen Schmelzgranulats zur Bekämpfung von pflanzlichen und tierischen Schädlingen sowie von pflanzenpathogenen Mikroorganismen.

Die Erfindung wird durch die Beispiele näher erläutert ohne sie darauf zu beschränken.

### Beispiele

### Verwendete Tenside und ihre chemische Klassen

| | |
|---|---|
| Genapol PF80 | EO-PO, nicht alkyliert |
| Hostapon T | N-Methyl-Oleoyl-Taurid-Natrium |
| Nekal BX | alkylierte Naphthalinsulfonsäure-Natrium |
| Stepanol Me Dry | Natrium Laurylsulfat |
| Geropon T36 | Co-Polymer aus Isobuthen und Maleinsäure-Anhydrid-Natrium |
| Sipernat 50S | Hochabsorbtive Fällungskieselsäure |
| Omya Kreide | Natürliches CaCO₃ |

### Herstellungsbeispiele

### Beispiel 1

20 g einer 50% Lösung von Glufosinat Ammonium in Wasser, 1 g Mergal K9N, sowie 100 g Propylenglycol wurden mit einer Lösung von 100 g Stepanol Me Dry in 200 g Wasser vermischt.
Die erhaltene Lösung wurde unter Rühren mit einem Blattrührer in 100 g Aerogel P508 eingetragen und daran absorbiert.
Dieses Vor-Absorbat wurde in einem Wirbelschichttrockner 20 Minuten bei 50°C getrocknet.
Das trockene Absorbat wurde in einem Pflugscharmischer mit 489 g Kaolin sowie mit 200 g pulverförmigen Polyethylenglycol mit einem Molekulargewicht von 20 000 innig vermischt:
200 g dieser Endmischung wurden auf einem Wirbelschichtgranulator 10 Min bei einer Lufteinlasstemperatur von 100°C und einer Luftmenge von 25 m³/h in Wirbelschicht gehalten. Dabei hielt sich die Produkttemperatur bei ca. 80°C, and das zunächst pulverartige Granuliergut agglomerierte zu kugeligen Granulen mit glatter Oberfläche.
Danach wurde auf Kaltluft umgeschaltet und weitergewirbelt, bis die Apparatetempertur sich auf 25°C abgekühlt hatte.
Es wurden 187 g mit 10 Gew.-% Glufosinate-Ammonium beladenes Schmelzgranulat erhalten.

### Beispiel 2

52 g Metolachlor (techn. Wirkstoff, 92 %) wurden in einem Labormischer an 26 g Sipernat 50S absorbiert. Das Absorbat wurde dann mit 40 g PEG 20 000, 20 g Morwet D425, 4 g Morwet EFW, sowie 58g Kaolin innig vermischt.
Diese Endmischung wurde auf einem Wirbelschichtgranulator 10 Min bei einer Lufteinlasstemperatur von 100-105°C und einer Luftmenge von 30 m³/h in Wirbelschicht gehalten. Dabei hielt sich die Produkttemperatur bei ca. 80°C, and das zunächst pulverartige Granuliergut agglomerierte zu kugeligen Granulen mit glatter Oberfläche.
Danach wurde auf Kaltluft umgeschaltet und weitergewirbelt, bis die Apparatetempertur sich auf 25°C abgekühlt hatte.
Es wurden 174 g mit ca. 24 Gew.-% Metolachlor beladenes Schmelzgranulat erhalten.

### Beispiel 3

Auf einem beheizbaren Metallteller wurden 700 g Fructose (Lebensmittelqualität) unter Rühren 95°C geschmolzen. 250 g lodosulfuron Methyl-Natrium (88,7 %ig) wurden zügig eingetragen und das Gemisch erkalten gelassen. Die feste Masse wurde in Platten gebrochen und mechanisch zerkleinert.
190 g des so erhaltenen Materials wurden zusammen mit 1,8 g Hostapon T, 0,2 g Mergal K9N (absorbiert an 8 g Sipernat 22S) in einer Labormühle homogenisiert, Es wurden so 195 g wasserdispergierbares Pulver auf Basis Schmelzgranulat erhalten.

In analoger Form werden die in der Tabelle angegebenen Wirbelschichtgranulate der Beispiele 4 bis 14 erhalten:

(In der nachfolgenden Tabelle sind die Anteile der Komponenten der erfindungsgemäßen Schmelzgranulate in Gew.-% angegeben)

**Tabelle**

| | Beispiel Nr. | | | | | | | | | |
|---|---|---|---|---|---|---|---|---|---|---|
| | 4 | 5 | 6 | 7 | 8 | 9 | 10 | 11 | 12 | 13 |
| Foramsulfuron | 10 | | | | | | | | | |
| lodosulfuron | | 8 | | | | | | | | |
| Mesosulfuron | | | 15 | | | | | | | |
| Amidosulfuron | | | | 25 | | | | | | |
| Ethoxysulfuron | | | | | 14 | | | | | |
| Nicosulfuron | | | | | | 8 | | | | |
| Pyrasulfotol | | | | | | | 17 | | | |
| Deltametrin | | | | | | | | 8 | | |
| Fipronil | | | | | | | | | 12 | |
| Tebuconazol | | | | | | | | | | 24 |
| Glucose | 22 | | | | | | | | | |
| Fructose | | 18 | | | | | | | | |
| Manose | | | 30 | | | | | | | |
| Xylit | | | | | 22 | | | | | |
| Maltose | | | | | | 23 | | | | |
| Polyglykol 35000 | | | | 50 | | | | | | |
| Polyglykol 20000 | | | | | | | 54 | | | |
| Polyglykol 8000 | | | | | | | | 45 | | |
| Polyglykol 6000 | | | | | | | | | 60 | |
| Genapol PF 80 | | | | | | | | | | 12 |
| Hostapon T | 5 | | 3 | | | | | | | 6 |
| Nekal BX | | 4 | | 3 | 6 | 4 | | 6 | | |
| GeroponT36 | | | | | | | 5 | | 8 | |
| Kaolin 1777 | 63 | | 52 | | 58 | | | | | |
| Omya Kreide | | 70 | | 22 | | 65 | 24 | | 20 | |
| Sipernat 50 S | | | | | | | | 41 | | 58 |
| Summe | 100 | 100 | 100 | 100 | 100 | 100 | 100 | 100 | 100 | 100 |

## Patentansprüche

1. Schmelzgranulat, enthaltend
a) einen oder mehrere Wirkstoffe;
b) ein oder mehrere Tenside;
c) ein oder mehrere Bindemittel aus der Gruppe der Saccharide und Polyethylenglykole mit einem Molekulargewicht von mindestens 15000;
d) einen oder mehrere Träger und
e) gegebenenfalls weitere Hilfs- und Zusatzstoffe.

2. Schmelzgranulat gemäß Anspruch 1 enthaltend
a) 0,01 bis 80 Gew.-% an einem oder mehreren Wirkstoffen;
b) 1 bis 60 Gew.-% an einem oder mehreren Tensiden;
c) 1 bis 80 Gew.-% an einem oder mehreren Bindemitteln aus der Gruppe der Saccharide und Polyethylenglykole mit einem Molekulargewicht von mindestens 15000;
d) 2 bis 75 Gew.-% an einem oder mehreren Trägerstoffen, und
e) gegebenenfalls 1 bis 85 Gew.-% an üblichen Hilfs- un Zusatzstoffen.

3. Schmelzgranulat gemäß Anspruch 1 oder 2, enthaltend als Komponente a) einen oder mehrere agrochemische Wirkstoffe.

4. Schmelzgranulat gemäß einem der Ansprüche 1 bis 3, enthaltend ein oder mehrere Bindemittel aus der Gruppe Zuckeralkohole, Monosaccharide, Disaccharide und Polysaccharide.

5. Schmelzgranulat gemäß einem der Ansprüche 1 bis 3, enthaltend ein oder mehrere Bindemittel aus der Gruppe der Polyethylenglycole.

6. Schmelzgranulat nach einem der Ansprüche 1 bis 5, enthaltend einen oder mehrere Träger aus der Gruppe der Silikate, Kreiden, Gips und wasserlöslichen anorganischen Salze.

7. Verfahren zur Herstellung eines Schmelzgranulats gemäß einem der Ansprüche 1 bis 6, wobei die Komponenten a) bis e) mit Luft, die eine Temperaturen im Bereich von 40 bis 400°C aufweist, aufgewirbelt und aufgeheizt werden, so dass das Bindemittel schmilzt und es zu einer Agglomerierung der aufgewirbelten Partikel kommt.

8. Verfahren zur Bekämpfung von Schadorganismen, wobei ein Schmelzgranulat gemäß einem der Ansprüche 3 bis 6 in Form einer wässrigen Spritzbrühe auf die Schadorganismen oder deren Lebensraum aufgebracht wird.

9. Verwendung eines Schmelzgranulats gemäß einem der Ansprüche 3 bis 6 zur Bekämpfung von pflanzlichen und tierischen Schädlingen sowie von pflanzenpathogenen Mikroorganismen.
